# EUROPÄISCHE PATENTSCHRIFT

(11) **EP 1 645 929 B1**
(45) Veröffentlichungstag und Bekanntmachung des Hinweises auf die Patenterteilung: **04.02.2009**
(21) Anmeldenummer: 04104965.1
(22) Anmeldetag: 11.10.2004
(51) Int. Cl.: G06F 21/00

(54) **Kommunikationskarte für mobile Netzwerkgeräte sowie Authentifikationsverfahren für Benutzer mobiler Netzwerkgeräte**
Communication card for mobile network devices and authentification method for users of mobile network devices
Carte de communication pour dispositifs de réseau mobiles et procédé d'authentification des utilisateurs des dispositifs de réseau mobiles

(43) Veröffentlichungstag der Anmeldung: 12.04.2006
(73) Patentinhaber: Swisscom (Schweiz) AG, 3050 Bern (CH)
(72) Erfinder: Lauper, Eric, 3014, Bern (CH)
(74) Vertreter: BOVARD AG

(56) Entgegenhaltungen:
- WO-A-98/38567
- DE-A- 10 053 390
- DE-A- 19 648 767
- GB-A- 2 372 178
- GB-A- 2 394 326
- US-A- 5 546 463
- US-A1- 2003 214 780
- US-B1- 6 173 405

## Beschreibung

Die vorliegende Erfindung betrifft eine Kommunikationskarte für mobile Netzwerkgeräte und ein ebensolches Authentifikationsverfahren für Benutzer mobiler Netzwerkgeräte, wobei Identifikationsdaten von einem Benutzer gespeichert werden und die Identifikationsdaten Daten zur Authentifizierung des mindestens einen Benutzers im Netzwerk umfassen. Insbesondere betrifft die Erfindung mobile Netzwerkgeräte mit PC- und/oder PCI-Karten Interface.

Weltweit werden zur Zeit immer mehr Computer- und Kommunikationssysteme dazu gebraucht, Daten über Netzwerke, wie z.B. einem LAN (Local Area Network), einem WAN (Wide Area Network) oder dem Internet via z.B. dem öffentlichen, geschalteten Telefonnetzwerk (PSTN: Public Switched Telephone Network) oder einem Mobilfunknetz (PLMN: Public Land Mobile Network) wie z.B. GSM- (Global System for Mobile Communication) oder UMTS-Netzen (Universal Mobile Telecommunications System) oder WLAN (Wireless LAN) etc. zu beziehen oder zu übermitteln. Insbesondere werden dabei kostenpflichtige und/oder zugriffskontrollierte Daten wie Multimediadaten dargestellt und/oder bearbeitet und/oder anderen Computersystemen modifiziert zur Verfügung gestellt. Unter Multimediadaten fallen u.a. digitale Daten wie Texte, Graphiken, Bilder, Animationen, Video, Quicktime und Tonaufnahmen. Dazu gehören auch MPx (MP3) oder MPEGx (MPEG7) Standards, wie sie durch die Moving Picture Experts Group definiert werden. Die zuverlässige, eindeutige und für den Benutzer problemlose Identifikation und/oder Authentifikation des Benutzers ist bei den kostenpflichtigen und/oder zugriffskontrollierten, d.h. schutzbedürftigen Daten häufig problematisch. Im Stand der Technik lassen sich viele unterschiedliche Verfahren dazu finden. U.a. ist ein häufig verwendetes Verfahren die Eingabe eines PIN-Codes, d.h. einer persönlichen Identifikationsnummer, durch den Benutzer. Der PIN wird entweder mittels lokal gespeicherten Identifikationsdaten des Benutzers überprüft und verifiziert oder über das Netzwerk an eine Zentraleinheit z.B. verschlüsselt übermittelt, welche den PIN basierend auf Datenbankeinträgen verifiziert. Das Verfahren hat jedoch viele bekannte Nachteile. Einerseits ist es z.B. nicht sehr benutzerfreundlich, da sich der Benutzer den PIN merken muss und der PIN über Eingabeelemente wie z.B. Tastaturen eingegeben werden muss. Häufig besitzt der Benutzer heute mehrere PINs für unterschiedliche Geräte und/oder Dienste, die er sich merken muss, was das Ganze für ihn erschwert. Gerade bei älteren Menschen oder Kindern ist zudem nicht immer sichergestellt, dass sie sich solche PIN problemlos merken können. Ein anderes Problem ist, dass die PIN auch keine zuverlässige, fälschungssichere Authentifikation eines Benutzers sicherstellen. Zum einen können PINs durch nicht fachgerechtes Verwalten durch den Benutzer leicht in die Hände Dritter geraten und von ihnen dann leicht in betrügerischer Art benutzt werden, zum anderen können PINs auch durch Dritte erraten, im Netzwerk abgefangen, mittels eingeschlichener Codes, wie z.B. trojanischen Pferden/Sniffern oder anderweitig betrügerisch ermittelt werden. Als Sniffer (engl. "to sniff" für schnüffeln) wird Software bezeichnet, die den Datenverkehr eines Netzwerks empfangen und darstellen kann. Ein Sniffer, wie z.B. die bekannten tcpdump, etheral, Ettercap oder RFC 1761 kennt den so genannten non-promiscuous Mode und den Promiscuous Mode. Im non-promiscuous Mode wird der ankommende und abgehende Datenverkehr des eigenen Computers gesnifft. Im Promiscuous Mode sammelt der Sniffer den gesamten Datenverkehr an die in diesen Modus geschaltete Netzwerkschnittstelle. Es werden also nicht nur die an ihn adressierten Frames empfangen, sondern auch die nicht an ihn adressierten. An was ein Frame adressiert ist, wird in Ethernet Netzwerken anhand der MAC-Adresse (Media Access Control) festgelegt.

Im Stand der Technik ist das Erfassen von biometrischen Merkmalen und/oder das Messen von physikalischen Grössen eines Individuums bekannt, um die Identität der betreffenden Person festzustellen oder eine vorgegebene Identität zu verifizieren. Häufig werden biometrische Merkmale (z.B. Fingerabdrücke, Retinacharakterisitiken etc.) mit physikalischen Grössen wie z.B. Blutdruck, Temperatur etc.) kombiniert, um eine grössere Sicherheit zu garantieren. Basierend auf solchen biometrischen Merkmalen und/oder physikalischen Grössen entwickelten sich so eine Vielzahl von zunehmend zuverlässigeren Verfahren zur Verifikation von Individuen sowohl im One-to-One als auch im One-to-Many-Verfahren. Dadurch wurde die Biometrik zu einem mächtigen Werkzeug bei der Identifikation oder Authentifikation von Personen. Echtzeit-Erfassung (Live Capturing) von biometrischen Messproben zwischen einem Benutzer und einem biometrischen System verlangt eine signifikante Speicherkapazität, Rechenleistung und Übertragungsraten um die entsprechenden biometrischen Analysefunktionen durchführen zu können. Zudem verlangen die Verfahren meist das komplizierte Installieren von Hardware- und/oder Softwarekomponenten. Gerade bei mobilen Netzwerkgeräten, wie z.B. Laptops, PDAs (Personal Digital Assistant), Mobilfunkgeräten etc., sind solche Komponenten in den seltensten Fällen installiert, da zusätzliche Komponenten für die Portabilität der Geräte hinderlich ist. Zusätzlich sind die üblichen Komponenten zur Erfassung von biometrischen Merkmalen nicht angepasst für den Gebrauch bei unterschiedlichsten Anwendungen und Applikationen. U.a. aus den oben genannten Gründen hat sich die Verwendung biometrischer Identifikation bei mobilen Netzwerkgeräten bis heute nicht durchgesetzt. Trotzdem ist klar, dass bei den heutigen Ansprüchen an Sicherheit und Benutzerfreundlichkeit durch den enorm gewachsenen Gebrauch von mobilen Netzwerkgeräten, insbesondere in zellulären Mobilfunksystemen, wie z.B. bei GSM (Global System for Mobile Communications) und/oder UMTS (Universal Mobile Telecommunications System) oder im WLAN (Wireless LAN)-Bereich preiswerte portable biometrische Systeme wünschenswert sind.

Die internationale Patentanmeldung WO 98/11750 zeigt ein solches Authentifikationsverfahren. Das mobile Kommunikationsgerät umfasst eine Scanneinheit zu Erfassen von Fingerabdrücken. Die werden von dem mobilen Kommunikationsgerät an ein zentrales Authentifikationssystem weitergeleitet, wie sie analysiert werden und mit Datenbankeinträgen zur Authentifikation verglichen. Im zentralen Authentifikationssystem ist jede mobile Identifikationsnummer (MIN) einem Fingerabdruck eines Benutzers zugeordnet.

Die Patentschrift US 5,546,463 zeigt ein portables Gerät zur Authentifizierung eines Benutzers und zur Verschlüsselung von Datenverbindungen zu einem Netzwerk. Das portable Gerät umfasst eine Netzwerkschnittstelle, beispielsweise ein Modem, sowie eine Kommunikationsschnittstelle zu einem Computer, beispielsweise eine PCMCIA Schnittstelle. Mittels gespeicherter elektronischer Schlüssel wird das portable Gerät gegenüber dem Netzwerk authentifiziert. Optional wird ein von einem Benutzer eingegebener PIN für die Authentifizierung eines Benutzers an Geräte des Netzwerks übermittelt.

Die Offenlegungsschrift DE 196 48 767 zeigt eine elektronische Chipkarte mit einem Speicher für biometrische Merkmale, mit Sensoren zum Erfassen von biometrischen Merkmalen und mit Mittel zum Vergleich der gespeicherten mit den erfassten biometrischen Merkmalen. Die Chipkarte wird in ein Lesegerät eingeführt und biometrische Merkmale eines Benutzers werden erfasst. Bei einer Übereinstimmung wird die eigentliche Chipkartenfunktion, beispielsweise eine Geldbörse oder ein Zutrittsschlüssel, freigegeben.

Es ist eine Aufgabe der vorliegenden Erfindung, ein neues und verbessertes Authentifikationsverfahren sowie eine entsprechende Kommunikationskarte vorzuschlagen, die ein einfaches und benutzerfreundliches gleichzeitig aber ein den modernen Sicherheitsansprüchen genügendes Authentifikationsverfahren für Benutzer mobiler Netzwerkgeräte sowie eine entsprechende Kommunikationskarte vorschlagen. Es ist eine Aufgabe der Erfindung, dass die Authentifikation ohne kompliziertes Installieren unterschiedlicher Hardwarekomponenten erfolgen kann.

Gemäss der vorliegenden Erfindung werden diese Ziele insbesondere durch die Elemente des unabhängigen Anspruchs erreicht. Weitere vorteilhafte Ausführungsformen gehen ausserdem aus den abhängigen Ansprüchen und der Beschreibung hervor.
Insbesondere werden diese Ziele durch die Erfindung dadurch erreicht, dass eine wiederentfernbare und/oder einschiebbare Kommunikationskarte für mobile Netzwerkgeräte, wie z.B. eine PC-Karte gemäss dem Personal Computer Memory Card International Association (PCMCIA) Standard oder PCI-Karte gemäss dem Peripheral Component Interconnect (PCI) Standard ein Netzwerkinterfacemodule zum bidirektionalen Übertragen von Daten zwischen dem mobilen Netzwerkgerät und dem Netzwerk umfasst, dass die Kommunikationskarte ein Identifikationsmodul zum Speichern von Identifikationsdaten von Benutzern, wie z.B. ein Subscriber Identity Modul (SIM) oder Smartcard, umfasst, wobei die Identifikationsdaten mindestens Daten zur Authentifizierung eines Benutzers im Netzwerk umfassen, dass die Kommunikationskarte eine Messvorrichtung zum Erfassen von biometrischen Merkmalen, wie z.B. Fingerabdrücken und/oder Retinalcharakteristiken des menschlichen Auges umfasst, und dass die Kommunikationskarte ein Analysemodul mit einer Prozessoreinheit umfasst, wobei mittels Analysemodul mindestens ein biometrisches Merkmal des Benutzers mit den abgespeicherten Identifikationsdaten des Benutzers vergleichbar und/oder zuordenbar ist. Die wiederentfernbare Kommunikationskarte kann z.B. mittels einer kontaktbehafteten Schnittstelle mit dem Netzwerkgerät verbunden sind. Es ist aber auch vorstellbar, dass die Anbindung an das Netzwerkgerät mittels einer kontaktlosen Schnittstelle geschieht. Die Messvorrichtung kann z.B. derart angebracht sein, dass bei verbundener kontaktbehafteter Schnittstelle das mindestens eine biometrische Merkmal des Benutzers mittels der Messvorrichtung erfassbar ist, d.h. dass die Messvorrichtung, wie z.B. eine Scanneinheit für Fingerabdrücke, bei installierter Kommunikationskarte für den Benutzer stets zugänglich bleibt. Die Daten zur Authentifizierung des Benutzers im Netzwerk können z.B. mindestens die IMSI und/oder die MSISDN umfassen. Dies hat u.a. den Vorteil, dass es ein einfaches und benutzerfreundliches Authentifikationsverfahren erlaubt. Mit der erfindungsgemässen Vorrichtung und dem Verfahren ist eine hohe Portabilität gewährleistet. Der Benutzer braucht z.B. nur die Kommunikationskarte mitzuführen und kann sie jederzeit bei örtlich vorhandenen und zugänglichen Netzwerkgeräten zum Einsatz bringen. Durch die erfindungsgemässe Integration aller Komponenten erübrigt sich ein kompliziertes Abstimmen der Komponenten durch den Benutzer aufeinander. Ebenso ist das Installieren und/oder Integrieren von zusätzlichen Softwarekomponenten im mobilen Netzwerkgerät nicht notwendig. Ein weiterer Vorteil der Erfindung sit u.a. dass die Benutzerauthentifizierung rascher, einfacher und benutzerfreundlicher als die Eingabe des PINs ist. So kann sie beisspielsweise mit einem einzigen Finger vom Benutzer ohne anstrengende Augenarbeit und/oder Manipulationen über die Tastatur vorgenommen werden. Erfindungsgemäss umfassen die Identifikationsdaten zusätzlich einen PIN-Code, der vom Benutzer mittels Eingabeelementen des Netzwerkgerätes Initialisierung der Identifikationsdaten benutzbar ist. Diese Ausführungsvariante hat u.a. den Vorteil, dass der Dienstanbieter des Netzwerkes seinen Kunden bei der erstmaligen Benutzung der Kommunikationskarte eine einfache Möglichkeit bieten kann, die Kommunikationskarte zu initialisieren bzw. seine persönlichen biometrischen Daten den entsprechenden Identifikationsdaten zuzuordnen.

In einer Ausführungsvariante umfasst die Messvorrichtung eine Scanneinheit zum Erfassen von Fingerabdrücken, wobei die Scanneinheit derart angebracht ist, dass bei verbundener kontaktbehafteter Schnittstelle Fingerabdrücke des Benutzers erfassbar sind. Die Scanneinheit kann z.B. bei eingeschobener Kommunikationskarte sich leicht vom Netzwerkgehäuse abheben oder vorstehen. Dies hat den Vorteil, dass solche Fingerprint-Scannerkomponenten heute im Stand der Technik bzw. auf dem Markt leicht erhältlich sind und integriert werden können.

In einer weiteren Ausführungsvariante ist die Messvorrichtung im Identifizierungsmodul integriert und somit en bloc wegnehmbar. Diese Ausführungsvariante hat u.a. die gleichen Vorteile wie die vorhergehenden. Zusätzlich lässt sich dadurch die Erfindung einfacher integrieren und/oder upzudaten.

In einer anderen Ausführungsvariante umfasst das Netzwerkinterfacemodul eine drahtlose und/oder verdrahtet verbindbare Schnittstelle zur Verbindung mit dem Netzwerk. Dies hat u.a. den Vorteil, dass mit der Kommunikationskarte auf lokale Anforderungen, z.B. das Vorhandensein eines Breitbandfixnetzwerkes oder nur Mobilfunknetzwerke, vom Benutzer leicht und optimal (z.B. in Bezug auf Bandbreite, Datensicherheit, Kosten etc.) reagiert werden kann, ohne dass er sich um die Anbindung seines Netzwerkgerätes sorgen müsste.

In einer weiteren Ausführungsvariante sind unterschiedliche biometrische Merkmale mittels der Messvorrichtung erfassbar, wobei bei einem nicht eindeutig mittels des Analysemoduls zuordenbaren biometrischen Merkmal mindestens ein weiteres biometrisches Merkmal des Benutzers mittels der Messvorrichtung erfassbar ist. Dies hat u.a. dem Vorteil, dass bei nicht klarem oder eindeutigem Erkennen des biometrischen Merkmales die Vorrichtung und das Verfahren eine Fall-Back Möglichkeit besitzt, um den Benutzer doch noch zu authentifizieren.

In einer wieder anderen Ausführungsvariante umfassen die Identifikationsdaten zusätzlich einen PIN-Code, der vom Benutzer mittels Eingabeelementen des Netzwerkgerätes als Fall-Back benutzbar ist, falls das mindestens eine biometrische Merkmal vom Analysemodul nicht eindeutig zuordenbar ist. Diese Ausführungsvariante hat u.a. die gleichen Vorteile wie die vorhergehende, wobei hier nicht unbedingt mehrere unterschiedliche Messvorrichtungen für unterschiedliche biometrische Merkmale vorhanden sein müssen. Dies kann besonders dann vorteilhaft sein, wenn kostengünstige Lösungen gesucht werden müssen.

In einer Ausführungsvariante kann die Messvorrichtung auch dynamische Werte, wie beispielsweise Bewegungen des Fingers aufnehmen. Somit können mittels eines Sensors für Fingerabdrücke nicht nur die Fingerabdrücke selber aufgenommen werden, sondern auch die Weise, wie der Benutzer seinen Finger auf den Sensor gelegt oder über den Sensor angebracht hat. Dies kann z.B. besonders relevant für kapazitive, linienmässige Fingerabdrucksensoren sein, die fähig sind, lineare Bewegungen und/oder Drehungen des Fingers aufzunehmen.

In einer wieder anderen Ausführungsvariante werden mittels Sensoren der Messvorrichtung ein oder mehrere individuelle physikalische Messgrössen des Benutzers, insbesondere Körpertemperatur und/oder Blutdruck und/oder Puls und/oder elektrische Ströme an der Körperfläche, erfasst, wobei die Sensoren an der Kommunikationskarte derart angebracht werden, dass bei verbundener kontaktbehafteter Schnittstelle die ein oder mehreren individuellen physikalischen Messgrössen des Benutzers erfassbar sind. Diese Ausführungsvariante hat u.a. den Vorteil, dass die Sicherheit bei der Authentifizierung des Benutzers weiter erhöht werden kann.

An dieser Stelle soll festgehalten werden, dass sich die vorliegende Erfindung neben der erfindungsgemässen Kommunikationskarte auch auf ein entsprechendes Authentifikationsverfahren bezieht.

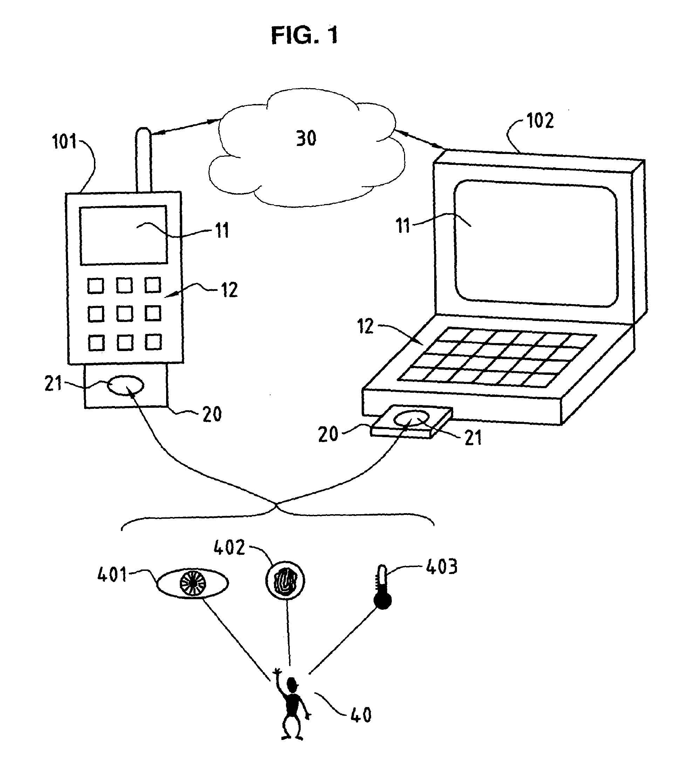

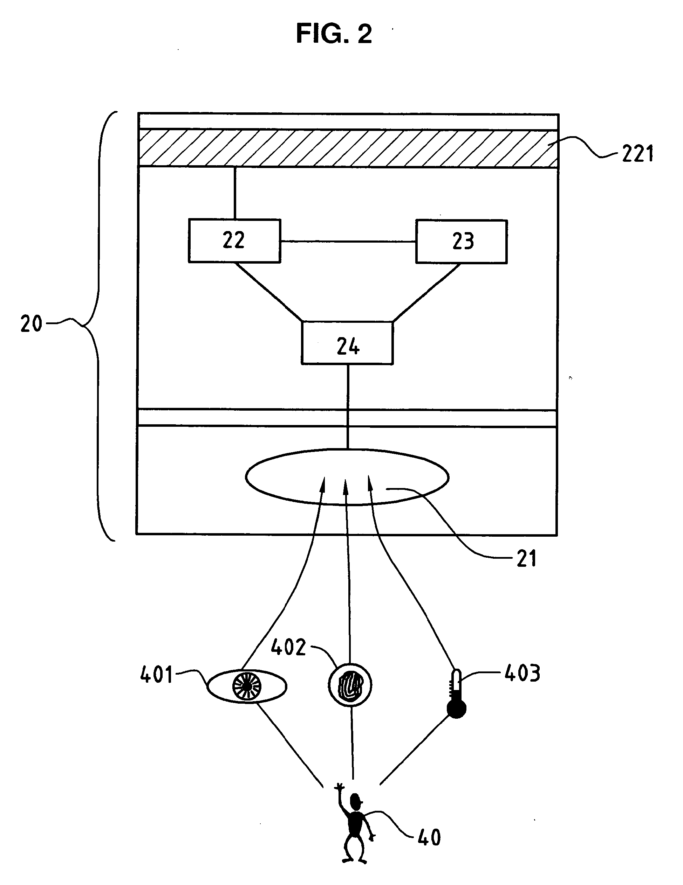

Nachfolgend wird eine Ausführung der vorliegenden Erfindung anhand eines Beispiels beschrieben. Das Beispiel wird durch die beigelegten Figuren 1 und 2 illustriert, die ein schematisches Blockdiagramm des Authentifikationsverfahrens bzw. der wiedereinsetzbaren Kommunikationskarte 20 zeigen. Gleiche Referenznummern in den Figuren beziehen sich auf die gleichen Elemente. Die wiederentfernbare oder einschiebbare Kommunikationskarte 20 für mobile Netzwerkgeräte 101/102 umfasst ein Netzwerkinterfacemodule 22 zur bidirektionalen Übertragen von Daten zwischen dem mobilen Netzwerkgerät 101/102 und einem Netzwerk 30. Die Kommunikationskarte 20 umfasst die notwendigen hardware- und/oder softwaremässig realisierten Komponenten zur Durchführung des erfindungsgemässen Verfahrens. Das mobile Netzwerkgerät 101/102 des Benutzers kann beispielsweise ein PC (Personal Computer), ein PDA (Personal Digital Assistant), ein Mobilfunkgerät und/oder eine Anzeigevorrichtung wie ein Fernsehgerät oder ein Retinal Scanning Display sein (insbesondere z.B. in Kombination mit einem Broadcastempfänger). Die Referenznummer 11 bezeichnet eine Anzeigevorrichtung und die Referenznummer 12 eine Eingabevorrichtung des mobilen Netzwerkgerätes 101/102. Das Netzwerkinterfacemodul 22 kann z.B. eine z.B. über eine Antenne drahtlose und/oder eine verdrahtet z.B. über einen Stecken verbindbare Schnittstelle 221 zur Verbindung mit dem Netzwerk 30 umfassen. Das Netzwerk 30 kann ein Kommunikationsnetz umfassen wie beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite IP-basierte Internet oder ein geeignetes LAN (Local Area Network) oder ein WAN (Wide Area Network) oder ein Kabel-TV Netzwerk oder eine Broadcast-Netzwerk. Insbesondere umfasst es auch ISDN- und XDSL-Verbindungen. Die bidirektional übertragenen Daten können z.B. Multimediadaten wie u.a. digitale Daten wie Texte, Graphiken, Bilder, Karten, Animationen, bewegte Bilder, Video, Quicktime, Tonaufnahmen, Programme (Software), programmbegleitende Daten und Hyperlinks oder Verweise auf Multimediadaten umfassen. Dazu gehören z.B. auch MPx (MP3) oder MPEGx (MPEG4 oder 7) Standards, wie sie durch die Moving Picture Experts Group definiert werden. Die Daten können an unterschiedlichen Orten in unterschiedlichen Netzen für die mobilen Netzwerkgeräte 20 zugreifbar abgespeichert sein. Die letztgenannten Netzwerke können z.B. ein LAN (Local Area Network) oder ein WAN (Wide Area Network), das Internet, Broadcastkabelnetze, PSTN, PLMN o.ä. umfassen.

Die wiederentfernbare Kommunikationskarte 20 kann z.B. mittels einer kontaktbehafteten und/oder einer kontaktlosen Schnittstelle mit dem Netzwerkgerät 101/102 verbunden sein. Die wiederentfernbare Kommunikationskarte 20 für die mobilen Netzwerkgeräte 101/102 kann z.B. als PC-Karte gemäss dem Personal Computer Memory Card International Association (PCMCIA) Standard oder PCI-Karte gemäss dem Peripheral Component Interconnect (PCI) Standard realisiert sein. Die Messvorrichtung 21 kann z.B. derart angebracht sein, dass bei verbundener kontaktbehafteter Schnittstelle das mindestens eine biometrische Merkmal 401/402 des Benutzers 40 mittels der Messvorrichtung 21 erfassbar ist. Z.B. kann die Messvorrichtung 21 eine Scanneinheit zum Erfassen von Fingerabdrücken 402 und/oder Retinalcharakteristiken und/oder Gesichtscharakteristiken umfassen. Die Scanneinheit kann z.B. eine Kamera sein. Die Scanneinheit kann z.B. derart angebracht sein, dass bei verbundener kontaktbehafteter Schnittstelle Fingerabdrücke 402 und/oder die Retinalcharakteristiken des Benutzers 40 erfassbar sind.

Die Messvorrichtung 21 kann z.B. zusätzlich Sensoren zum Erfassen von ein oder mehreren individuellen physikalischen Messgrössen 403 des Benutzers 40, wie z.B. Körpertemperatur und/oder Blutdruck und/oder Augendruck und/oder Puls oder anderen Messgrössen, umfassen. Die Sensoren können z.B. derart angebracht sein, dass bei verbundener kontaktbehafteter Schnittstelle die ein oder mehreren individuellen physikalischen Messgrössen 403 des Benutzers 40 erfassbar sind. Durch das Kombinieren von biometrischen Merkmalen mit physikalischen Messgrössen kann z.B. eine erhöhte Sicherheit bei Authentifizierung gewährleistet werden. Z.B. kann verhindert werden, dass mittels eines künstlichen Fingers die Eingabe des biometrischen Merkmales (hier des Fingerabdruckes) gefälscht wird, wenn zugleich Fingertemperatur und/oder Blutdruck im Finger und/oder Puls im Finger des Benutzers etc. gemessen wird.

Die Kommunikationskarte 20 umfasst ein Identifikationsmodul 23 zum Speichern von Identifikationsdaten von Benutzern 40. Die Identifikationsdaten umfassen mindestens Daten zur Authentifizierung eines Benutzers 40 im Netzwerk 30. Das Identifikationsmodul 23 kann z.B. ein Subscriber Identity Modul (SIM) oder eine Smartcard sein und/oder umfassen. Die Daten zur Authentifizierung des Benutzers 40 im Netzwerk 30 können z.B. mindestens die IMSI (International Mobile Subscriber Identity) und/oder die MSISDN-Nummer (Mobile Subscriber Integrated Services Digital Network) umfassen. Die Kommunikationskarte 20 umfasst eine Messvorrichtung 21 zum Erfassen von biometrischen Merkmalen 401/402 eines Benutzers 40. Die Kommunikationskarte 20 umfasst ein Analysemodul 24 mit einer Prozessoreinheit. Mittels Analysemodul 24 wird das mindestens eine biometrische Merkmal 401/402 des Benutzers 40 analysiert und mit den abgespeicherten Identifikationsdaten des Benutzers 40 verglichen. Das Analysemodul 24 kann hardware- und/oder softwaremässig realisiert sein. Falls entsprechende vergleichbare Identifikationsdaten zuordenbar sind, wird der Benutzer 40 authentifiziert. Das Identifikationsmodul 23 kann z.B. von der Kommunikationskarte 20 wegnehmbar sein. Dadurch entsteht eine hohe Transportabilität der biometrischen Merkmale von einer Kommunikationskarte 20 auf die andere in dem sich die Lernprozesse für die Eingabe der biometrischen Merkmale bei jeder neuen Kommunikationskarte 20 erübrigen.

Es kann z.B. sinnvoll sein, dass unterschiedliche biometrische Merkmale 401/402 mittels der Messvorrichtung 21 erfassbar sind. So kann z.B. bei einem nicht eindeutig mittels dem Analysemodul 24 einem Benutzer 40 zuordenbaren biometrischen Merkmal 401/402 mindestens ein weiteres biometrisches Merkmal 401/402 des Benutzers 40 mittels der Messvorrichtung 21 erfasst werden, um die Eindeutigkeit der Zuordnung sicherzustellen. Dies würde als ein Art Fall-Back Verfahren für die Kommunikationskarte 20 verwendet werden können. Eine andere Möglichkeit ist beispielsweise, dass die Identifikationsdaten zusätzlich einen PIN-Code umfassen, der vom Benutzer 40 mittels Eingabeelemente des Netzwerkgerätes 101/102 als Fall-Back benutzbar ist, falls das mindestens eine biometrische Merkmal 401/402 vom Analysemodul 24 nicht eindeutig zuordenbar ist. Zur Initialisierung der Kommunikationskarte 20, d.h. beim erstmaligen Abspeichern von Identifikationsdaten des Benutzers 40, können die Identifikationsdaten zusätzlich einen PIN-Code umfassen, der vom Benutzer 40 mittels Eingabeelemente 12 des Netzwerkgerätes 101/102 bei der Initialisierung der Identifikationsdaten benutzbar ist.

Im Falle von einer Multiprotokoll-Karte 20, welche gleichzeitig z.B. die Protokolle GSM (Global System for Mobile Communication), GPRS (Generalized Packet Radio Service), WLAN (Wireless Local Area Netzwork) und UMTS (Universal Mobile Telecommunications System) unterstützt, kann z.B. die selbe biometrische Identität für alle Kommunikationsnetze 30 verwendet werden, welche vom Analysemodul 24 mit den jeweiligen Identitäten in den jeweiligen Kommunikationsnetzen 30 zugewiesen sind. Das erfindungsgemässe, Verfahren ist insbesondere für Seamless Handover Kommunikationskarten 20 besonders geeignet.

## Patentansprüche

1. Wiederentfernbare Kommunikationskarte (20) für ein mobiles Netzwerkgerät (101/102), wobei die Kommunikationskarte (20) ein Netzwerkinterfacemodul (22) zum bidirektionalen Übertragen von Daten zwischen dem mobilen Netzwerkgerät (101/102) und einem Netzwerk (30) umfasst, wobei die Kommunikationskarte (20) ein Identifikationsmodul (23) zum Speichern von Identifikationsdaten von Benutzern (40) umfasst, und wobei die Identifikationsdaten mindestens Daten zur Authentifizierung eines Benutzers (40) im Netzwerk (30) umfassen, **dadurch gekennzeichnet,**
**dass** die Kommunikationskarte (20) eine Messvorrichtung (21) zum Erfassen von biometrischen Merkmalen (401/402) eines Benutzers (40) umfasst, und
**dass** die Kommunikationskarte (20) ein Analysemodul (24) mit einer Prozessoreinheit umfasst, wobei mittels Analysemodul (24) das mindestens eine biometrische Merkmal (401/402) des Benutzers (40) mit den abgespeicherten Identifikationsdaten des Benutzers (40) vergleichbar und/oder zuordenbar ist, und
**dass** die Identifikationsdaten zusätzlich einen PIN-Code umfassen, der vom Benutzer (40) mittels Eingabeelementen (12) des Netzwerkgerätes (101/102) zur Identifizierung bei der erstmaligen Erfassung des mindestens einen biometrischen Merkmals (401/402) benutzt wird.

2. Wiederentfernbare Kommunikationskarte (20) nach Anspruch 1, **dadurch gekennzeichnet**, das die wiederentfernbare Kommunikationskarte (20) mittels einer kontaktbehafteten Schnittstelle (221) mit dem Netzwerkgerät (101/102) verbunden ist.

3. Wiederentfernbare Kommunikationskarte (20) nach Anspruch 2, **dadurch gekennzeichnet, dass** die Messvorrichtung (21) derart angebracht ist, dass bei verbundener kontaktbehafteter Schnittstelle das mindestens eine biometrische Merkmal (401/402) des Benutzers (40) mittels der Messvorrichtung (21) erfassbar ist.

4. Wiederentfernbare Kommunikationskarte (20) nach einem der Ansprüche 2 bis 3, **dadurch gekennzeichnet, dass** die Messvorrichtung (21) eine Scanneinheit zum Erfassen von Fingerabdrücken (402) umfasst, wobei die Scanneinheit derart angebracht ist, dass bei verbundener kontaktbehafteter Schnittstelle Fingerabdrücke (402) des Benutzers (40) erfassbar sind.

5. Wiederentfernbare Kommunikationskarte (20) nach Anspruch 1, **dadurch gekennzeichnet**, das die wiederentfernbare Kommunikationskarte (20) mittels einer kontaktlosen Schnittstelle mit dem Netzwerkgerät (101/102) verbindbar ist.

6. Wiederentfernbare Kommunikationskarte (20) nach einem der Ansprüche 1 bis 5, **dadurch gekennzeichnet, dass** das Netzwerkinterfacemodul (22) eine drahtlose und/oder verdrahtete verbindbare Schnittstelle (221) zur Verbindung mit dem Netzwerk (30) umfasst.

7. Wiederentfernbare Kommunikationskarte (20) nach einem der Ansprüche 1 bis 6, **dadurch gekennzeichnet, dass** unterschiedliche biometrische Merkmale (401/402) mittels der Messvorrichtung (21) erfassbar sind, wobei bei einem nicht eindeutig mittels dem Analysemodul (24) zuordenbaren biometrischen Merkmal (401/402) mindestens ein weiteres biometrisches Merkmal (401/402) des Benutzers (40) mittels der Messvorrichtung (21) erfassbar ist.

8. Wiederentfernbare Kommunikationskarte (20) nach einem der Ansprüche 1 bis 7, **dadurch gekennzeichnet, dass** die Identifikationsdaten zusätzlich einen PIN-Code umfassen, der vom Benutzer (40) mittels Eingabeelementen des Netzwerkgerätes (101/102) als Fall-Back benutzbar ist, falls das mindestens eine biometrische Merkmal (401/402) vom Analysemodul (24) nicht eindeutig zuordenbar ist.

9. Wiederentfernbare Kommunikationskarte (20) nach einem der Ansprüche 1 bis 8, **dadurch gekennzeichnet, dass** das Identifikationsmodul (23) ein Subscriber Identity Modul (SIM) umfasst.

10. Wiederentfernbare Kommunikationskarte (20) nach einem der Ansprüche 1 bis 8, **dadurch gekennzeichnet, dass** das Identifikationsmodul (23) eine Smartcard umfasst.

11. Wiederentfernbare Kommunikationskarte (20) nach einem der Ansprüche 1 bis 10, **dadurch gekennzeichnet, dass** die Daten zur Authentifizierung des Benutzers (40) im Netzwerk (30) mindestens die IMSI und/oder MSISDN umfassen.

12. Wiederentfernbare Kommunikationskarte (20) nach einem der Ansprüche 1 bis 11, **dadurch gekennzeichnet, dass** die Messvorrichtung (21) im Identifikationsmodul (23) integriert realisiert wird.

13. Wiederentfernbare Kommunikationskarte (20) nach einem der Ansprüche 1 bis 12, **dadurch gekennzeichnet, dass** mittels der Messvorrichtung (21) dynamische Werte insbesondere Bewegungen des Fingers erfasst werden.

14. Wiederentfernbare Kommunikationskarte (20) nach einem der Ansprüche 1 bis 13, **dadurch gekennzeichnet, dass** die Kommunikationskarte (20) eine PC- oder PCI-Karte ist.

15. Wiederentfernbare Kommunikationskarte (20) nach einem der Ansprüche 1 bis 14, **dadurch gekennzeichnet, dass** die Messvorrichtung (21) zusätzlich Sensoren zum Erfassen von einer oder mehreren individuellen physikalischen Messgrössen (403) des Benutzers (40), insbesondere Körpertemperatur und/oder Blutdruck und/oder Puls und/oder elektrische Ströme an der Körperfläche, umfasst, wobei die Sensoren derart angebracht sind, dass bei verbundener kontaktbehafteter Schnittstelle die eine oder mehreren individuellen physikalischen Messgrössen (403) des Benutzers (40) erfassbar sind.

16. Authentifikationsverfahren für Benutzer (40) mobiler Netzwerkgeräte (101/102), wobei Identifikationsdaten von einem Benutzer (40) gespeichert werden, wobei die Identifikationsdaten Daten zur Authentifizierung des mindestens einen Benutzers (40) im Netzwerk (30) umfassen, **dadurch gekennzeichnet,**
**dass** der Benutzer (40) zur Identifikation bei der erstmaligen Erfassung des mindestens einen biometrischen Merkmales (401/402) mittels eines PIN-Codes über Eingabeelemente des Netzwerkgerätes (101/102) identifiziert wird,
**dass** mittels einer Messvorrichtung (21) einer Kommunikationskarte (20) mindestens ein biometrisches Merkmal (401/402) des Benutzers (40) erfasst wird und auf ein Analysemodul (24) der Kommunikationskarte (20) übertragen wird,
**dass** mittels einer Prozessoreinheit des Analysemoduls (24) das mindestens eine biometrische Merkmal (401/402) des Benutzers (40) mit abgespeicherten biometrischen Identifikationsdaten des Benutzers (40) verglichen und/oder den Identifikationsdaten des Benutzers (40) zugeordnet wird, und
**dass** bei erfolgreicher Authentifikation des Benutzers (40) mittels eines Netzwerkinterfacemoduls (22) der Kommunikationskarte (20) der Benutzer (40) im Netzwerk (30) authentifiziert wird und Daten bidirektional zwischen dem mobilen Netzwerkgerät (101/102) und dem Netzwerk (30) übertragen werden.

17. Authentifikationsverfahren nach Anspruch 16, **dadurch gekennzeichnet**, das die wiederentfernbare Kommunikationskarte (20) mittels einer kontaktbehafteten Schnittstelle (221) an das Netzwerkgerät (101/102) angebunden wird.

18. Authentifikationsverfahren nach Anspruch 17, **dadurch gekennzeichnet, dass** die Messvorrichtung (21) auf der Kommunikationskarte (20) derart angebracht wird, dass bei verbundener kontaktbehafteter Schnittstelle das mindestens eine biometrische Merkmal (401/402) des Benutzers (40) mittels der Messvorrichtung (21) erfassbar ist.

19. Authentifikationsverfahren nach einem der Ansprüche 16 bis 18, **dadurch gekennzeichnet, dass** mittels einer Scanneinheit der Messvorrichtung (21) Fingerabdrücke des Benutzers (40) erfasst werden, wobei die Scanneinheit derart angebracht ist, dass bei verbundener kontaktbehafteter Schnittstelle Fingerabdrücke des Benutzers (40) erfassbar sind.

20. Authentifikationsverfahren nach Anspruch 16, **dadurch gekennzeichnet**, das die wiederentfernbare Kommunikationskarte (20) mittels einer kontaktlosen Schnittstelle an das Netzwerkgerät (101/102) anbindbar ist.

21. Authentifikationsverfahren nach einem der Ansprüche 16 bis 20, **dadurch gekennzeichnet, dass** die Verbindung zwischen Kommunikationskarte (20) und Netzwerk (30) mittels einer drahtlosen und/oder verdrahteten verbindbaren Schnittstelle erstellt wird.

22. Authentifikationsverfahren nach einem der Ansprüche 16 bis 21, **dadurch gekennzeichnet, dass** bei einem nicht eindeutig mittels dem Analysemodul (24) zuordenbaren biometrischen Merkmal (401/402) mindestens ein weiteres biometrisches Merkmal (401/402) des Benutzers (40) mittels der Messvorrichtung (21) erfasst wird und mit abgespeicherten Identifikationsdaten verglichen wird.

23. Authentifikationsverfahren nach einem der Ansprüche 16 bis 22, **dadurch gekennzeichnet, dass** der Benutzer (40) sich mittels eines PIN-Codes über die Eingabeelemente des Netzwerkgerätes (101/102) authentifiziert, falls das mindestens eine biometrische Merkmal (401/402) vom Analysemodul (24) nicht eindeutig zuordenbar ist.

24. Authentifikationsverfahren nach einem der Ansprüche 16 bis 23, **dadurch gekennzeichnet, dass** der Benutzer (40) zur Identifikation bei der erstmaligen Erfassung des mindestens einen biometrischen Merkmales (401/402) mittels eines PIN-Codes über Eingabeelemente des Netzwerkgerätes (101/102) identifiziert wird.

25. Authentifikationsverfahren nach einem der Ansprüche 16 bis 24, **dadurch gekennzeichnet, dass** als Identifikationsmodul (23) eine Subscriber Identity Modul (SIM) verwendet wird.

26. Authentifikationsverfahren nach einem der Ansprüche 16 bis 25, **dadurch gekennzeichnet, dass** als Identifikationsmodul (23) eine Smartcard verwendet wird.

27. Authentifikationsverfahren nach einem der Ansprüche 16 bis 26, **dadurch gekennzeichnet, dass** als Daten zur Authentifizierung des Benutzers (40) im Netzwerk (30) mindestens die IMSI verwendet werden.

28. Authentifikationsverfahren nach einem der Ansprüche 16 bis 27, **dadurch gekennzeichnet, dass** die Messvorrichtung (21) im Identifikationsmodul (23) integriert realisiert ist.

29. Authentifikationsverfahren nach einem der Ansprüche 16 bis 28, **dadurch gekennzeichnet, dass** die Messvorrichtung (21) Mittel zum Erfassen von dynamischen Werten insbesondere Bewegungen des Fingers umfasst.

30. Authentifikationsverfahren nach einem der Ansprüche 16 bis 29, **dadurch gekennzeichnet, dass** die Kommunikationskarte (20) gemäss dem Personal Computer Memory Card International Association (PCMCIA) Standard und/oder dem Peripheral Component Interconnect (PCI) Standard realisiert ist.

31. Authentifikationsverfahren nach einem der Ansprüche 16 bis 30, **dadurch gekennzeichnet, dass** mittels Sensoren der Messvorrichtung (21) eine oder mehrere individuelle physikalische Messgrössen (403) des Benutzers (40), insbesondere Körpertemperatur und/oder Blutdruck und/oder Puls und/oder elektrische Ströme an der Körperfläche, erfasst werden, wobei die Sensoren an der Kommunikationskarte (20) derart angebracht werden, dass bei verbundener kontaktbehafteter Schnittstelle die eine oder mehreren individuellen physikalischen Messgrössen (403) des Benutzers (40) erfassbar sind.

## Claims

1. Removable communication card (20) for a mobile network device (101/102), the communication card (20) comprising a network interface module (22) for bidirectional transmission of data between the mobile network device (101/102) and a network (30), the communication card (20) comprising an identification module (23) for storing identification data for users (40), and the identification data comprising at least data for authentication of a user (40) in the network (30), **characterised**
**in that** the communication card (20) comprises a measurement device (21) for capturing biometric features (401/402) of a user (40), and
**in that** the communication card (20) comprises an analysis module (24) with a processor unit, by means of the analysis module (24) the at least one biometric feature (401/402) of the user (40) being comparable with and/or assignable to the stored identification data of the user (40), and
**in that** the identification data comprise in addition a PIN code, which is used by the user (40) by means of input elements (12) of the network device (101/102) for identification upon first-time capturing of the at least one biometric feature (401/402).

2. Removable communication card (20) according to claim 1, **characterised in that** the removable communication card (20) is connected to the network device (101/102) by means of a contact interface (221).

3. Removable communication card (20) according to claim 2, **characterised in that** the measurement device (21) is installed such that, with contact interface connected, the at least one biometric feature (401/402) of the user (40) is able to be captured by means of the measurement device (21).

4. Removable communication card (20) according to one of the claims 2 to 3, **characterised in that** the measurement device (21) comprises a scanning unit for capturing fingerprints (402), the scanning unit being installed such that, with contact interface connected, fingerprints (402) of the user (40) are able to be captured.

5. Removable communication card (20) according to claim 1, **characterised in that** the removable communication card (20) is connectible to the network device (101/102) by means of a contactless interface.

6. Removable communication card (20) according to one of the claims 1 to 5, **characterised in that**, for connection to the network (30), the network interface module (22) comprises an interface (221) connectible wirelessly and/or by wire.

7. Removable communication card (20) according to one of the claims 1 to 6, **characterised in that** different biometric features (401/402) are able to be captured by means of the measurement device (21), at least one further biometric feature (401/402) of the user (40) being able to be captured by means of the measurement device (21) in the case where a biometric feature (401/402) is not able to be assigned unambiguously by means of the analysis module (24).

8. Removable communication card (20) according to one of the claims 1 to 7, **characterised in that** the identification data further comprise a PIN code which is usable by the user (40) as a fallback by means of input elements of the network device (101/102) if the at least one biometric feature (401/402) is not unambiguously assignable by the analysis module (24).

9. Removable communication card (20) according to one of the claims 1 to 8, **characterised in that** the identification module (23) comprises a Subscriber Identity Module (SIM).

10. Removable communication card (20) according to one of the claims 1 to 8, **characterised in that** the identification module (23) comprises a smart card.

11. Removable communication card (20) according to one of the claims 1 to 10, **characterised in that** the data for authentication of the user (40) in the network (30) comprises at least the IMSI and/or MSISDN.

12. Removable communication card (20) according to one of the claims 1 to 11, **characterised in that** the measurement device (21) is achieved in an integrated way in the identification module (23).

13. Removable communication card (20) according to one of the claims 1 to 12, **characterised in that** by means of the measurement device (21) dynamic values, in particular movements of the finger, are able to be captured.

14. Removable communication card (20) according to one of the claims 1 to 13, **characterised in that** the communication card (20) is a PC card or PCI card.

15. Removable communication card (20) according to one of the claims 1 to 14, **characterised in that** the measurement device (21) further comprises sensors for capturing one or more individual physical measurement values (403) for the user (40), in particular body temperature and/or blood pressure and/or pulse and/or electric current on the body surface, the sensors being installed such that the one or more individual physical measurement values (403) of the user (40) are able to be captured with contact interface connected.

16. Authentication method for users (40) of mobile network devices (101/102), identification data for a user (40) being stored, the identification data comprising data for authentication of the at least one user (40) in the network (30), **characterised**
**in that**, for identification upon first-time capturing of the at least one biometric feature (401/402), the user is identified by means of a PIN code via input elements of the network device (101/102),
**in that**, by means of a measurement device (21) of a communication card (20), at least one biometric feature (401/402) of the user (40) is captured and is transmitted to an analysis module (24) of the communication card (20),
**in that**, by means of a processor unit of the analysis module (24), the at least one biometric feature (401/402) of the user (40) is compared with stored biometric identification data for the user (40) and/or is assigned to the identification data for the user (40), and
**in that**, upon successful authentication of the user (40), the user (40) is authenticated in the network (30) by means of a network interface module (22) of the communication card (20), and data are transmitted bidirectionally between the mobile network device (101/102) and the network (30).

17. Authentication method according to claim 16, **characterised in that** the removable communication card (20) is connected to the network device (101/102) by means of a contact interface (221).

18. Authentication method according to claim 17, **characterised in that** the measurement device (21) is installed on the communication card (20) in such a way that, with contact interface connected, the at least one biometric feature (401/402) of the user (40) is able to be captured by means of the measurement device (21).

19. Authentication method according to one of the claims 16 to 18, **characterised in that**, by means of a scanning unit of the measurement device (21) fingerprints of the user (40) are captured, the scanning unit being installed such that, with contact interface connected, fingerprints of the user (40) are able to be captured.

20. Authentication method according to claim 16, **characterised in that** the removable communication card (20) is connectible to the network device (101/102) by means of a contactless interface.

21. Authentication method according to one of the claims 16 to 20, **characterised in that** the connection between communication card (20) and network (30) is made by means of an interface connectible wirelessly and/or by wire.

22. Authentication method according to one of the claims 16 to 21, **characterised in that** in the case of a biometric feature (401/402) not able to be unambiguously assigned by means of the analysis module (24), at least one further biometric feature (401/402) of the user (40) is captured by means of the measurement device (21) and is compared with stored identification data.

23. Authentication method according to one of the claims 16 to 22, **characterised in that** the user (40) authenticates himself by means of a PIN code via the input elements of the network device (101/102), if the at least one biometric feature (401/402) is not able to be assigned unambiguously by the analysis module (24).

24. Authentication method according to one of the claims 16 to 23, **characterised in that**, for identification upon first-time capturing of the at least one biometric feature (401/402), the user (40) is identified by means of a PIN code via input elements of the network device (101/102).

25. Authentication method according to one of the claims 16 to 24, **characterised in that** used as the identification module (23) is a Subscriber Identity Module (SIM).

26. Authentication method according to one of the claims 16 to 25, **characterised in that** used as the identification module (23) is a smart card.

27. Authentication method according to one of the claims 16 to 26, **characterised in that** used as data for authentication of the user (40) in the network (30) is at least the IMSI.

28. Authentication method according to one of the claims 16 to 27, **characterised in that** the measurement device (21) is achieved in an integrated way in the identification module (23).

29. Authentication method according to one of the claims 16 to 28, **characterised in that** the measurement device (21) comprises means for capturing dynamic values, in particular movements of the finger.

30. Authentication method according to one of the claims 16 to 29, **characterised in that** the communication card (20) is achieved according to the Personal Computer Memory Card International Association (PCMCIA) standard and/or the Peripheral Component Interconnect (PCI) standard.

31. Authentication method according to one of the claims 16 to 30, **characterised in that**, by means of sensors of the measurement device (21), one or more individual physical measurement values (403) for the user (40), in particular body temperature and/or blood pressure and/or pulse and/or electric currents on the body surface, are captured, the sensors being installed on the communication card (20) such that the one or more individual physical measurement values (403) of the user (40) are able to be captured with contact interface connected.

## Revendications

1. Carte de communication amovible (20) pour un périphérique de réseau mobile (101/102),la carte de communication (20) comprenant un module d'interface réseau (22) pour la transmission bidirectionnelle de données entre le périphérique mobile de réseau (101/102) et un réseau (30), la carte de communication (20) comprenant un module d'identification (23) pour le stockage de données d'identification d'utilisateurs (40) et les données d'identification comprenant au moins des données pour l'authentification d'un utilisateur (40) dans le réseau (30), **caractérisée en ce que**
la carte de communication (20) comprend un dispositif de mesure (21) pour la saisie de caractéristiques biométriques (401/402) d'un utilisateur (40), et
**en ce que** la carte de communication (20) comprend un module d'analyse (24) avec une unité de processeur, au moyen du module d'analyse (24), au moins une caractéristique biométrique (401/402) de l'utilisateur (40) étant comparable et associable aux données d'identification stockées de l'utilisateur (40) et
les données d'identification comprennent en supplément un code PIN qui est utilisé par l'utilisateur (40) au moyen d'éléments de saisie (12) du périphérique réseau (101/102) pour l'identification lors de la première saisie d'au moins une caractéristique biométrique (401/402).

2. Carte de communication amovible (20) selon la revendication 1, **caractérisé en ce que** la carte de communication amovible (20) est reliée par une interface à contact (221) au périphérique de réseau (101/102).

3. Carte de communication amovible (20) selon la revendication 2, **caractérisée en ce que** le dispositif de mesure (21) est appliquée de sorte qu'en cas d'une interface reliée par contact au moins une caractéristique biométrique (401/402) de l'utilisateur (40) peut être saisie au moyen du dispositif de mesure (21)

4. Carte de communication amovible (20) selon l'une des revendications 2 à 3, **caractérisée en ce que** le dispositif de mesure (21) comprend une unité de scan pour la saisie d'empreintes digitales (402), l'unité de scan étant disposée de sorte que pour des interfaces reliées par contact des empreintes digitales (402) de l'utilisateur (40) sont saisies.

5. Carte de communication amovible (20) selon la revendication 1, **caractérisée en ce que** la carte de communication amovible (20) peut être reliée au moyen d'une interface sans contact au périphérique de réseau (101/102).

6. Carte de communication amovible (20) selon l'une des revendications 1 à 5, **caractérisée en ce que** le module d'interface réseau (22) comprend une interface sans fil et/ou câblée reliable (221) pour la connexion au réseau (30).

7. Carte de communication amovible (20) selon l'une des revendications 1 à 6, **caractérisée en ce que** des caractéristiques différentes biométriques (401/402) sont saisissables au moyen du dispositif de mesure (21), dans le cas d'une caractéristique biométrique (401/402) ne pouvant pas être associée de manière univoque au moyen du module d'analyse (24), au moins une autre caractéristique biométrique (401/402) de l'utilisateur (40) peut être saisie au moyen du dispositif de mesure (21).

8. Carte de communication amovible (20) selon l'une des revendications 1 à 7, **caractérisé en ce que** les données d'identification comprennent en supplément un code PIN qui est utilisable par l'utilisateur (40) au moyen de l'élément de saisie du périphérique réseau (101/102) en tant que circuit de secours si au moins une caractéristique biométrique (401/402) ne peut pas être associée de manière univoque par le module d'analyse (24).

9. Carte de communication amovible (20) selon l'une des revendications 1 à 8, **caractérisée en ce que** le module d'identification (23) comprend un module d'identité d'abonné (SIM).

10. Carte de communication amovible (20) selon l'une des revendications 1 à 8, **caractérisée en ce que** le module d'identification (23) comprend une carte intelligente dite Smartcard.

11. Carte de communication amovible (20) selon l'une des revendications 1 à 10, **caractérisée en ce que** les données d'authentification de l'utilisateur (40) comprennent dans le réseau (30) au moins l'IMSI (international mobile subscriber identity = identité internationale de l'abonné mobile) et/ou MSISDN (mobile station ISDN = numéro RNIS de station mobile).

12. Carte de communication amovible (20) selon l'une des revendications 1 à 11, **caractérisée en ce que** le dispositif de mesure (21) est intégré dans le module d'identification (23).

13. Carte de communication amovible (20) selon l'une des revendications 1 à 12, **caractérisée en ce que** le dispositif e mesure (21) saisit des valeurs dynamiques en particulier des mouvements du doigt.

14. Carte de communication amovible (20) selon l'une des revendications 1 à 13, **caractérisée en ce que** la carte de communication (20) est une carte PC ou une carte PCI

15. Carte de communication amovible (20) selon l'une des revendications 1 à 14, **caractérisée en ce que** le dispositif de mesure (21) comprend des capteurs supplémentaires pour la saisie d'une grandeurs ou de plusieurs grandeurs de mesures physiques individuelles (403) de l'utilisateur (40), en particulier la température corporelle, et/ou la pression artérielle et/ou le pouls et/ou des courants électriques sur le corps, les capteurs étant placés de sorte que dans le cas d'une interface reliée par contact une ou plusieurs grandeurs de mesure physique individuelles (403) de l'utilisateur (40) sont saisissables.

16. Procédé d'authentification pour l'utilisateur (40) d'appareils de réseau mobile (101/102), des données d'identification étant stockées par un utilisateur (40), les données d'identification comprenant des données pour l'authentification d'au moins un utilisateur (40) dans le réseau (30), **caractérisé**
**en ce que** l'utilisateur (40) est identifié pour l'identification lors de la première saisie d'au moins une caractéristique biométrique (401/402) au moyen d'un code PIN par des éléments de saisie de l'appareil du périphérique de réseau (101/102),
**en ce qu'**au moyen d'un dispositif de mesure (21) d'une carte de communication (20) au moins une caractéristique biométrique (401/402) de l'utilisateur (40) est saisie et est transmis à un module d'analyse (24) de la carte de communication (20),
**en ce qu'**au moyen d'une unité de processeur du module d'analyse (24), au moins une caractéristique biométrique (401/402) de l'utilisateur (40) est comparée à des données d'identification biométrique stockées de l'utilisateur (40) et/ou est associée aux données d'identification de l'utilisateur (40), et
**en ce qu'**en cas d'authentification positive de l'utilisateur (40) au moyen d'un module d'interface de réseau (22) de la carte de communication (20) l'utilisateur (40) est authentifié dans le réseau (30) et des données sont transférées bidirectionnellement entre le périphérique mobile de réseau (101/102) et le réseau (30).

17. Procédé d'authentification selon la revendication 16, **caractérisé en ce que** la carte de communication amovible (20) est reliée au périphérique de réseau (101/102) au moyen d'une interface à contact (221).

18. Procédé d'authentification selon la revendication 17, **caractérisé en ce que** le dispositif de mesure (21) est placé sur la carte de communication amovible (20) de sorte que dans le cas d'une interface reliée par contact au moins une caractéristique biométrique (401/402) de l'utilisateur (40) peut être saisie au moyen du dispositif de mesure (21).

19. Procédé d'authentification selon l'une des revendications 16 à 18, **caractérisé en ce qu'**au moyen d'une unité de scan du dispositif de mesure (21), des empreintes digitales de l'utilisateur (40) sont saisies, l'unité de scan étant disposée de sorte que dans le cas d'une interface reliée par contact, des empreintes digitales de l'utilisateur (40) peuvent être saisies.

20. Procédé d'authentification selon la revendication 16, **caractérisé en ce que** la carte de communication amovible (20) peut être reliée au moyen d'une interface sans contact au périphérique de réseau (101/102).

21. Procédé d'authentification selon l'une des revendications 16 à 20, **caractérisé en ce que** la liaison entre la carte de communication (20) et le réseau (30) est établie au moyen d'une interface sans fil et/ou câblée.

22. Procédé d'authentification selon l'une des revendications 16 à 21, **caractérisé en ce que** pour une caractéristique biométrique (401/402) associable de manière non univoque au moyen du module d'analyse (24) au moins une autre caractéristique biométrique (401/402) de l'utilisateur (40) est saisie au moyen du dispositif de mesure (21) et st comparée aux données d'identification stockées.

23. Procédé d'authentification selon l'une des revendications 16 à 22, **caractérisé en ce que** l'utilisateur (40) s'authentifie par un code PIN au moyen des éléments de saisie du périphériques de réseau (101/102) si au moins une caractéristique biométrique (401/402) ne peut pas être associée de manière univoque par le module d'analyse (24).

24. Procédé d'authentification selon l'une des revendications 16 à 23, **caractérisé en ce que** l'utilisateur (40) est identifié pour l'identification lors de la première saisie d'au moins une caractéristique biométrique (401/402) au moyen d'un code PIN par des éléments de saisie du périphérique de réseau (101/102).

25. Procédé d'authentification selon l'une des revendications 16 à 24, **caractérisé en ce qu'**en tant que module d'identification (23), on utilise un module d'identité d'abonné (SIM).

26. Procédé d'authentification selon l'une des revendications 16 à 25, **caractérisé en ce qu'**en tant que module d'identification (23) on utilise une carte intelligente dite Smartcard.

27. Procédé d'authentification selon l'une des revendications 16 à 26, **caractérisé en ce que** pour les données d'authentification de l'utilisateur (40) dans le réseau (30), on utilise au moins l'IMSI.

28. Procédé d'authentification selon l'une des revendications 16 à 27, **caractérisé en ce que** le dispositif de mesure (21) est intégré dans le module d'identification (23).

29. Procédé d'authentification selon l'une des revendications 16 à 28, **caractérisé en ce que** le dispositif de mesure (21) comprend des moyens pour la saisie de valeurs dynamiques en particulier de mouvements du doigt.

30. Procédé d'authentification selon l'une des revendications 16 à 29, **caractérisé en ce que** la carte de communication (20) est réalisée selon le standard PCMCIA soit la Personal Computer Memory Card International Association (Association internationale pour carte mémoire d'ordinateurs individuels) et/ou selon le standard PCI (Peripheral Component Interconnect = Interconnexion de composants périphériques).

31. Procédé d'authentification selon l'une des revendications 16 à 30, **caractérisé en ce qu'**au moyen de capteurs du dispositif de mesure (21) une ou plusieurs grandeurs de mesure individuelles physiques (403) de l'utilisateur (40), en particulier la température corporelle et/ou la pression artérielle et/ou le pouls et/ou des courants électriques sur la surface corporelle sont saisies, les capteurs étant placés sur la carte de communication (20) de sorte qu'en cas d'une interface reliée par contact une ou plusieurs grandeurs de mesure individuelles physiques (403) de l'utilisateur (40) sont saisissables.
